# EUROPEAN PATENT APPLICATION

(11) **EP 4 703 494 A1**
(43) Date of publication of application: **04.03.2026**
(21) Application number: 25198076.9
(22) Date of filing: 26.08.2025
(51) Int. Cl.: C23C 8/02, C23C 8/26, C23C 8/32, C23C 8/38, C23C 8/50, C23C 8/56, F01L 3/04, F01L 3/22

(54) **METHOD OF MANUFACTURING NITRIDED VALVE SEAT INSERT WITH SUPERSATURATED NITROGEN SURFACE LAYER AND PRODUCT THEREOF**

(30) Priority: 29.08.2024 US 202418818997
(71) Applicant: L.E. Jones Company, Menominee, MI 49858 (US)
(72) Inventor: QIAO, Cong Yue, Menominee (MI), 49858 (US); DOLL, David M., Fort Worth (TX), 76126 (US)
(74) Representative: Abitz & Partner

(57) **Abstract**

A pre-surface hardened valve seat insert and a process for forming a pre-surface hardened valve seat insert useful for insertion into a cylinder head or an engine block of an internal combustion engine. The process comprises the steps of (a) forming the valve seat insert by casting an iron-chromium alloy having no more than 75 weight percent iron and at least 25 wt.% alloying elements, the alloying elements including at least 9 wt.% chromium; (b) precision machining the valve seat insert to precise tolerances so that the valve seat insert can be installed in the cylinder head or the engine block with or without the need for additional seat machining; and (c) treating the valve seat insert to form an exposed wear resistant surface layer of supersaturated nitrogen free of nitride compounds.

## Description

### BACKGROUND OF THE INVENTION

### 1. Technical Field

The present invention relates to valve seat inserts for internal combustion engines and methods of making the same, and more specifically, to valve seat inserts that are precision formed and surface treated prior to insertion into internal combustion engines.

### 2. Related Prior Art

Valve seat inserts produced by known monolithic or composite methods may suffer wear in certain engine applications or they may cause wear of other engine parts such as the mating valve. In using monolithic or composite valve seat inserts, it is necessary to finish machine the seating surface after insertion into the cylinder head or engine block. In order to do this finish machining, the material employed in the insert must have some amount of machinability, which, in turn, may compromise the material's wear resistance.

When using monolithic material, it is normal practice to produce valve seat inserts out of the monolithic material via casting, wrought, or powder metallurgy practices. The valve seat inserts are then inserted into the cylinder head or engine block, and the seating surface is machined. The wear resistance of the insert's seating surface is thus the same as the bulk monolith from which the insert has been made, and is generally susceptible to wear problems.

Composite type inserts have also been used, with either a weld overlay or a bimetallic power metallurgy product, with a wear resistant material applied over a lower alloy substrate. However, the valve seat is first inserted into the cylinder head or engine block, and the seating surface is then finish machined after insertion. This finish machining after the wear resistant material has been applied compromises the resistant material, and makes the valve seat insert more susceptible to wear. Another practice is to subject valve seat inserts to nitriding as disclosed in commonly-owned U.S. Patent Nos. 6,519,847 and 7,216,427.

A problem with conventional nitriding of valve seat inserts is the creation of a "white layer" of nitride compounds which overlies a nitrogen diffusion zone. The white layer (nitride compound zone) possesses a significantly different thermal expansion coefficient than the underlying matrix material thus leading to separation between the compound zone and the matrix at high temperature or through a cyclic thermal environment. The ruptured compound zone debris can cause a high rate of abrasive wear during engine operation. Thus, there is a need in the art for improved valve seat inserts having improved wear resistance during engine operating conditions.

Nitriding is a common surface treatment for iron-based alloys to increase surface hardness for enhancing wear resistant performance. Ferritic nitrocarburizing can be achieved using salt-bath, gaseous, and ion nitriding methods. Ferritic nitriding is typically carried out within a temperature range between 560 to 580°C which is below A1 temperature for common iron-based alloy systems.

Several different iron - nitrogen phases can form during nitriding of parts made from iron-based alloys including alfa (α), alfa prime (α'), gamma (γ), gamma prime (γ'), epsilon (ε), eta (η), and gamma double prime (γ"). Among them, epsilon nitride (Fe₂₋₃N) or epsilon + gamma prime (Fe₄N) are commonly considered the basic constituents of a nitrided white layer (compound zone). In a majority of cases, a subjacent diffusion layer forms which consists of an N-enriched matrix along with nitride precipitates. The compound layer typically does not exceed a thickness of 10 µm while the diffusion zone can be significantly larger depending upon the alloy matrix to which nitriding is applied.

### SUMMARY OF THE INVENTION

The present invention is a substantial modification over existing processes used to produce valve seat inserts. The invention overcomes the above limitations of the prior art by eliminating the white layer typically formed during nitriding of valve seat inserts and instead providing valve seat inserts with an exposed supersaturated nitrogen surface region which does not rupture during engine operating conditions.

In an embodiment, a process for forming a surface hardened valve seat insert useful for insertion into a cylinder head or an engine block of an internal combustion engine, comprises the steps of: casting the valve seat insert from an iron-chromium alloy having no more than 75 weight percent (wt. %) iron and at least 25 wt. % alloying elements, the alloying elements including chromium in an amount of at least 9 wt.%; precision machining the valve seat insert to precise tolerances so that the valve seat insert can be installed in the cylinder head or the engine block with or without the need for additional seat machining; and nitriding the valve seat insert to produce an exposed supersaturated nitrogen region free of a white layer of nitride compounds.

In various embodiments, the nitriding step includes ferritic nitrocarburizing the valve seat insert, carbonitriding the valve seat insert, or gas nitriding the valve seat. In a preferred embodiment, the alloy is melted and formed into the shape of a valve seat insert during the casting step.

According to an embodiment, the iron-chromium alloy includes 0.15-2.00 wt.% C, 0.3-1.0 wt.% Mn, 0.10-2.15 wt.% Si, 0.35-2.25 wt.% Ni, 9.0-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt.% Fe. According to an embodiment, the iron-chromium alloy comprises, consists essentially of, or consists of 0.15-2.00 wt.% C, 0.3-1.0 wt.% Mn, 0.10-2.15 wt.% Si, 0.35-2.25 wt.% Ni, 9.0-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt.% Fe. The total amount of incidental impurities can be less than 3 wt%, less than 1.5 wt%, or less than 0.5 wt%.

According to an embodiment, the iron-chromium alloy includes 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 50-75 wt.% Fe. According to an embodiment, the iron-chromium alloy comprises, consists essentially of, or consists of 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 50-75 wt.% Fe. The total amount of incidental impurities can be less than 3 wt%, less than 1.5 wt%, or less than 0.5 wt%.

According to an embodiment, the iron-chromium alloy includes 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe. According to an embodiment, the iron-chromium alloy comprises, consists essentially of, or consists of 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe. The total amount of incidental impurities can be less than 3 wt%, less than 1.5 wt%, or less than 0.5 wt%.

According to an embodiment, the iron-chromium alloy includes 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe. According to an embodiment, the iron-chromium alloy comprises, consists essentially of, or consists of 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe. The total amount of incidental impurities can be less than 3 wt%, less than 1.5 wt%, or less than 0.5 wt%.

According to an embodiment, the iron-chromium alloy includes 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe. According to an embodiment, the iron-chromium alloy comprises, consists essentially of, or consists of 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe. The total amount of incidental impurities can be less than 3 wt%, less than 1.5 wt%, or less than 0.5 wt%.

According to an embodiment, the iron-chromium alloy includes 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe. According to an embodiment, the iron-chromium alloy comprises, consists essentially of, or consists of 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe. The total amount of incidental impurities can be less than 3 wt%, less than 1.5 wt%, or less than 0.5 wt%.

According to an embodiment, the iron-chromium alloy includes 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe. According to an embodiment, the iron-chromium alloy comprises, consists essentially of, or consists of 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe. The total amount of incidental impurities can be less than 3 wt%, less than 1.5 wt%, or less than 0.5 wt%.

According to an embodiment, the iron-chromium alloy includes 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe. According to an embodiment, the iron-chromium alloy comprises, consists essentially of, or consists of 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe. The total amount of incidental impurities can be less than 3 wt%, less than 1.5 wt%, or less than 0.5 wt%.

According to an embodiment, a valve seat insert is made by casting the valve seat insert from an iron-chromium alloy having no more than 75 weight percent (wt. %) iron and at least 25 wt. % alloying elements, the alloying elements including chromium in an amount of at least 9 wt.%.

According to an embodiment, the supersaturated nitrogen region has a nitrogen content of 1 to 5 weight percent.

According to an embodiment, the valve seat insert is cast from a melt of an iron-chromium alloy including 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe. According to an embodiment, the valve seat insert is cast from a melt of an iron-chromium alloy comprising, consisting essentially of, or consisting of 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe. The total amount of incidental impurities can be less than 3 wt%, less than 1.5 wt%, or less than 0.5 wt%.

According to an embodiment, the valve seat insert is cast from a melt of an iron-chromium alloy including 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe. According to an embodiment, the valve seat insert is cast from a melt of an iron-chromium alloy comprising, consisting essentially of, or consisting of 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe. The total amount of incidental impurities can be less than 3 wt%, less than 1.5 wt%, or less than 0.5 wt%.

According to an embodiment, the valve seat insert is cast from a melt of an iron-chromium alloy including 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe. According to an embodiment, the valve seat insert is cast from a melt of an iron-chromium alloy comprising, consisting essentially of, or consisting of 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe. The total amount of incidental impurities can be less than 3 wt%, less than 1.5 wt%, or less than 0.5 wt%.

According to an embodiment, the valve seat insert is cast from a melt of an iron-chromium alloy including 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe. According to an embodiment, the valve seat insert is cast from a melt of an iron-chromium alloy comprising, consisting essentially of, or consisting of 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe. The total amount of incidental impurities can be less than 3 wt%, less than 1.5 wt%, or less than 0.5 wt%.

According to an embodiment, the valve seat insert is cast from a melt of an iron-chromium alloy including 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe. According to an embodiment, the valve seat insert is cast from a melt of an iron-chromium alloy comprising, consisting essentially of, or consisting of 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe. The total amount of incidental impurities can be less than 3 wt%, less than 1.5 wt%, or less than 0.5 wt%.

According to an embodiment, the valve seat insert is formed from an iron-chromium alloy which can be nitrided at low temperatures to create an exposed nitrogen supersaturated surface region free of a white layer of nitride compounds.

### BRIEF DESCRIPTION OF THE DRAWINGS

Figure 1A (100x), Figure 1B (200x) and Figure 1C (500x) are photomicrographs of J120V after ion nitriding at 560°C for 15 hours.
Figure 2A (100x), Figure 2B (200x) and Figure 2C (500x) are photomicrographs of 120V after salt-bath nitriding at 580°C for 3 hours.
Figure 3A (100x) and Figure 3B (500x) are photomicrographs of J160 after ion nitriding at 500°C for 10 hours.
Figure 4A (100x) and Figure 4B (500x) are photomicrographs of J160 after ion nitriding at 560°C for 10 hours.
Figure 5A (100x) and Figure 5B (500x) are images of ion nitrided J155 after ion nitriding at 500°C for 15 hours.
Figure 6A (100x) and Figure 6B (500x) are images of ion nitrided J122 after ion nitriding at 500°C for 15 hours.
Figure 7A (100x) and Figure 7B (500x) are images of ion nitrided J125 after ion nitriding at 500°C for 15 hours.
Figure 8A (100x) and Figure 8B (500x) are images of ion nitrided J130 after ion nitriding at 500°C for 15 hours.
Figure 9A (100x) and Figure 9B (500x) are images of ion nitrided J303 after ion nitriding at 500°C for 15 hours.
Figure 10A (100x) and Figure 10B (500x) are images of ion nitrided J513 after ion nitriding at 500°C for 15 hours.
Figure 11 is a graph showing a correlation between iron content vs depth of the diffusion zone.
Figure 12A is a graph showing a microhardness traverse across a nitrided J120V sample salt-bath nitrided at 580°C for 3hours and Figure 12B is a graph showing a microhardness traverse across a J160N sample after gas nitriding at 571°C for 3 hours.

### DETAILED DESCRIPTION

Generally, the valve seat inserts, and process for producing the valve seat inserts according to the invention can be broken down into two general aspects: first, the valve seat inserts are precision formed, and second, the precision formed valve seat inserts are treated to increase wearability prior to insertion into the engine block.

In one embodiment, valve seat inserts are formed by sand casting a highly alloyed iron-base alloy such as an iron-chromium alloy having no more than 75 wt.% iron and at least 25 wt.% alloying elements, the alloying elements including at least 9 wt.% chromium. Sand casting techniques generally known in the art are used. It should be understood, however, that the use of other techniques for producing rough valve seat inserts are contemplated.

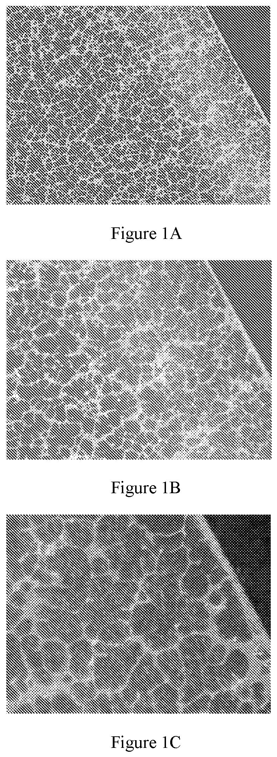

Nitrided J120V (M2 tool steel made by assignee L.E. Jones Co.) has been used for valve seat insert applications with typical nitriding temperatures within the range of 560 - 580°C. Figures 1A-C are photomicrographs at 100x, 200x and 500x, respectively, of J120V after ion nitriding at 560°C for 15 hrs. An exposed surface compound layer (white layer) is formed at this ion nitriding temperature.

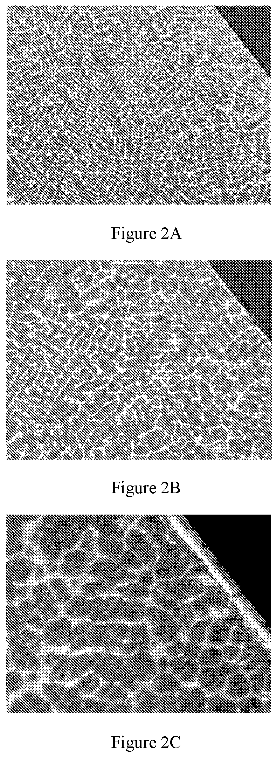

Figures 2A-C are photomicrographs at 100x, 200x, 500x, respectively, of J120V after salt-bath nitriding at 580°C for 3 hrs. An exposed surface compound layer (white layer) is formed at this salt-bath nitriding temperature.

The results obtained from the study of the J120V nitriding response show that compound layer formation in J120V reduces propensity of diffusion layer formation in the alloy system. The nitriding process is a diffusion controlled process; hence, the nitriding temperature is a key factor affecting compound layer formation besides matrix alloy system.

Compared to J120V, alloy J160 (made by assignee L.E. Jones Co.) contains a significantly higher content of overall alloying elements and has a distinct microstructure. In J160, an area of interdendritic region is a significant portion of the matrix while only thin network carbide exists in J120V, interdendritically.

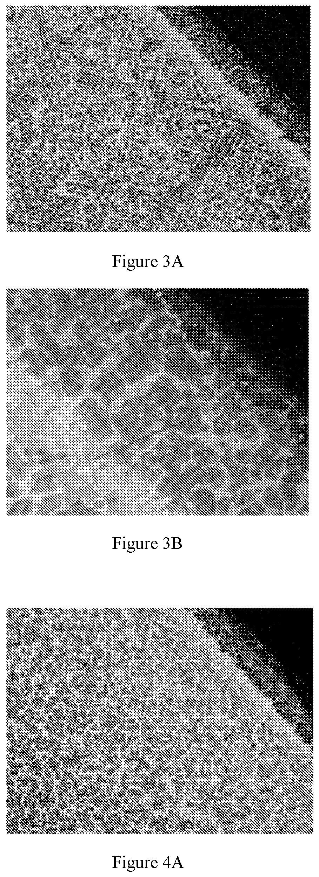

Figure 3A (100x) and Figure 3B (500x) are photomicrographs of J160 ion nitrided at 500°C for 10 hrs. As shown in these images, only a diffusion layer can be observed. Interestingly, the diffusion layer is composed of two distinguishable regions of darkened zone and subjacent brighter zone. Most likely, the darkened zone includes supersaturated nitrogen plus iron nitride precipitates while the brighter zone is mainly composed of matrix with supersaturated nitrogen. Unlike a compound zone, the thickness of the supersaturated nitrogen surface layer can be significantly larger in depth, e.g. 0.5 mm dependent upon the matrix system and nitriding condition. As a result, a small amount seat surface removal after a VSI installation in an engine cylinder head or block becomes applicable. In addition, the bonding strength between the supersaturated nitrogen layer and the underlying matrix is significantly greater than the bonding strength between a nitride compound layer and the matrix.

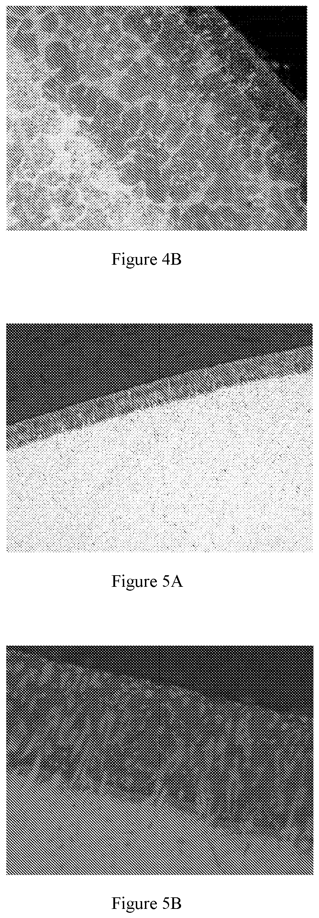

Figure 4A (100x) and Figure 4B (500x) are photomicrographs of J160 ion nitrided at 560°C for 10 hrs. When the nitriding temperature increased to 560°C, the size of the diffusion layer is essentially the same as in the sample nitrided at 500°C. Thus, the surface nitriding response of J160 is substantially different from that for J120V. As a result, compositional differences between the J120V and J160 alloys is believed to be the primary reason for their different nitriding responses.

In order to confirm above hypothesis, six additional alloys are assessed for their nitriding response. The nominal composition of all the alloys evaluated is summarized in Table 1. Among the eight iron-based alloys, J120V, J122, and J125 are tempered martensitic matrix alloys; J130 and J160 are martensitic + eutectoid matrix alloys, J155 is ferrite + primary carbide matrix alloy, J303 is ferritic matrix alloy and, J513 is intermetallic + martensitic matrix alloy.

**Table 1: Compositions of alloy systems evaluated**

| **Alloy** | **C** | **Mn** | **Si** | **Ni** | **Cr** | **Mo** | **V** | **Nb** | **W** | **Co** | **P** | **S** | **B** | **Fe** |
|---|---|---|---|---|---|---|---|---|---|---|---|---|---|---|
| J120V | 1.35 | 0.45 | 0.45 | - | 3.90 | 6.50 | 1.50 | - | 5.50 | - | - | - | - | ~80.0 |
| J122 | 0.90 | 0.70 | 2.00 | - | 3.00 | 4.50 | - | - | - | - | - | - | - | ~88.5 |
| J125 | 1.55 | 0.40 | 2.15 | 1.10 | 20.0 | - | - | - | - | - | - | - | - | ~75.0 |
| J130 | 1.60 | 0.45 | 0.10 | 1.00 | 9.80 | 9.15 | 1.30 | 1.90 | - | - | - | - | 0.23 | ~71.0 |
| J155 | 2.00 | 0.35 | 2.00 | 2.00 | 33.5 | 2.00 | - | 2.30 | 1.50 | - | - | - | 0.15 | ~54.0 |
| J160 | 1.45 | 0.35 | 0.60 | 0.35 | 13.0 | 5.40 | 1.25 | 2.00 | 4.00 | 3.70 | - | - | - | ~67.5 |
| J303 | 0.155 | 0.45 | 0.10 | 1.00 | 15.3 | 15.3 | 2.60 | 2.00 | - | 0.55 | - | - | 0.15 | ~62.0 |
| J513 | 1.95 | 0.30 | 0.50 | 2.25 | 16.0 | 12.0 | 0.10 | - | 0.145 | 19.0 | - | - | 0.05 | ~50.0 |

Figures 5 through 10 are photomicrographs of ion nitrided J155, J122, J125, J130, J303, and J513, respectively. The ion nitriding was carried out at 500°C for 15 hours for all six alloys. Among the six alloys, a compound layer only formed in J122 with thickness of approximate 2µm. The remaining five ion nitrided alloys had no compound layer.

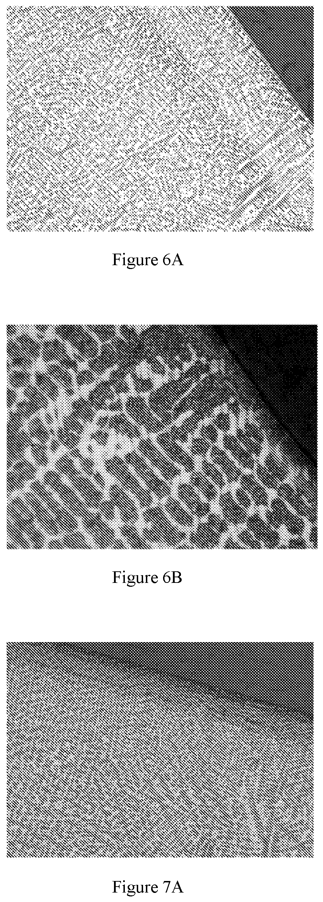

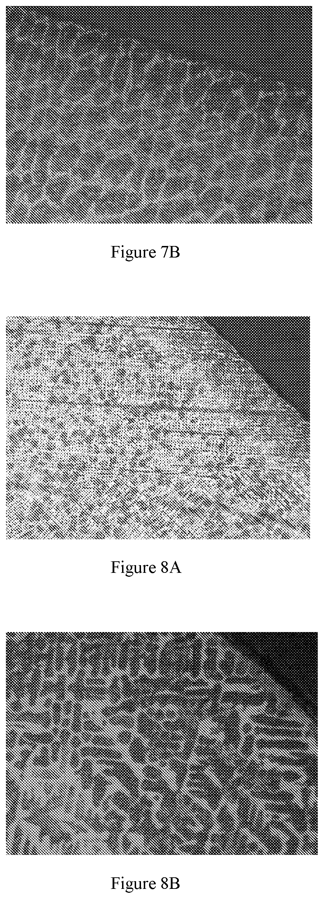

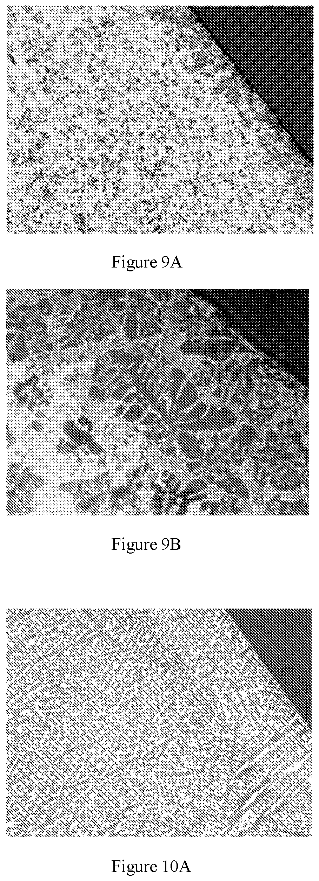

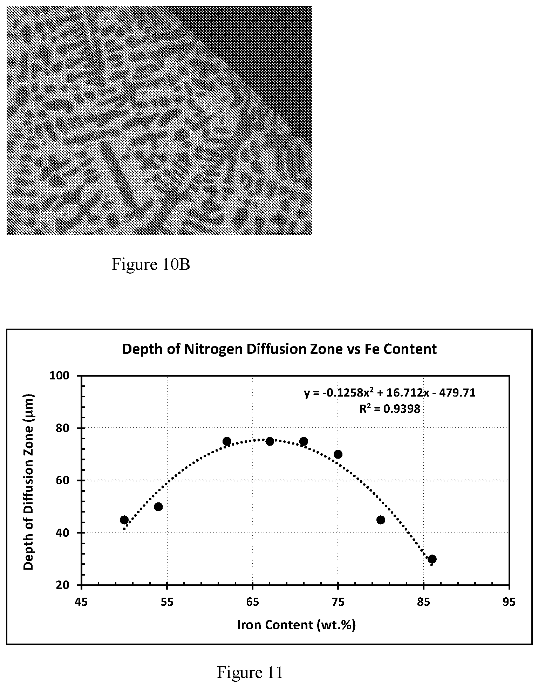

Diffusion layers for J155, J125, J130, J160, J303, and J513 are approximate 50µm, 70µm, 75µm, 75µm, 75µm, and 45µm, respectively. Figure 5A (100x) and Figure 5B (500x) are images of ion nitrided J155 after ion nitriding at 500°C for 15 hours, Figure 6A (100x) and Figure B (500x) are images of ion nitrided J122 after ion nitriding at 500°C for 15 hours, Figure 7A (100x) and Figure 7B (500x) are images of ion nitrided J125 after ion nitriding at 500°C for 15 hours, Figure 8A (100x) and Figure 8B (500x) are images of ion nitrided J130 after ion nitriding at 500°C for 15 hours, Figure 9A (100x) and Figure 9B (500x) are images of ion nitrided J303 after ion nitriding at 500°C for 15 hours, and Figure 10A (100x) and Figure 10B (500x) are images of ion nitrided J513 after ion nitriding at 500°C for 15 hours.

Figure 11 displays a correlation between iron content vs depth of the diffusion zone. Of the eight iron-based alloys examined, the most pronounced diffusion layer occurs when the iron content is around 65 wt.%. In addition, the propensity for formation of a nitrided compound layer is substantially suppressed when the iron content is lower than about 75 wt.%, preferably less than 70 wt.% and the chromium content is greater than about 9 wt.%, preferably greater than about 9.8 wt.%. As a result, J130 and J160 have a high potential to form a significant diffusion layer without a compound zone during a nitriding process. For many engineering applications such as valve seat inserts, a nitride component with only a diffusion layer is preferred over components with a surface compound layer which is prone to high susceptibility of thermally induced separation from the underlying matrix.

In an embodiment, white layer free (compound zone free) alloys suitable for ion nitriding include the J125, J130, J155, J160, J303 and J513 alloys listed in Table 1 which collectively have 0.15-2.00 wt.% C, 0.3-1.0 wt.% Mn, 0.10-2.15 wt.% Si, 0.35-2.25 wt.% Ni, 9.8-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt. % Fe; or, more generally, 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 50-75 wt.% Fe. These iron-chromium alloys can be cast with matrix microstructures such as a tempered martensitic matrix, a martensitic + eutectoid matrix, a ferrite + primary carbide matrix, a ferritic matrix, or an intermetallic + martensitic matrix alloy.

In an embodiment covering the J130 and J160 alloys, an alloy composition suitable for nitriding includes 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe; or, more generally, 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe.

In an embodiment covering the J303 alloy which differs from the other alloys by having very low C, an alloy suitable for nitriding includes 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe.

In an embodiment covering the J513 alloy which differs from the other alloys by having very high Co, an alloy suitable for nitriding includes 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe.

In an embodiment covering the J125 and J155 alloys, an alloy suitable for nitriding includes 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe; or, more generally 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.

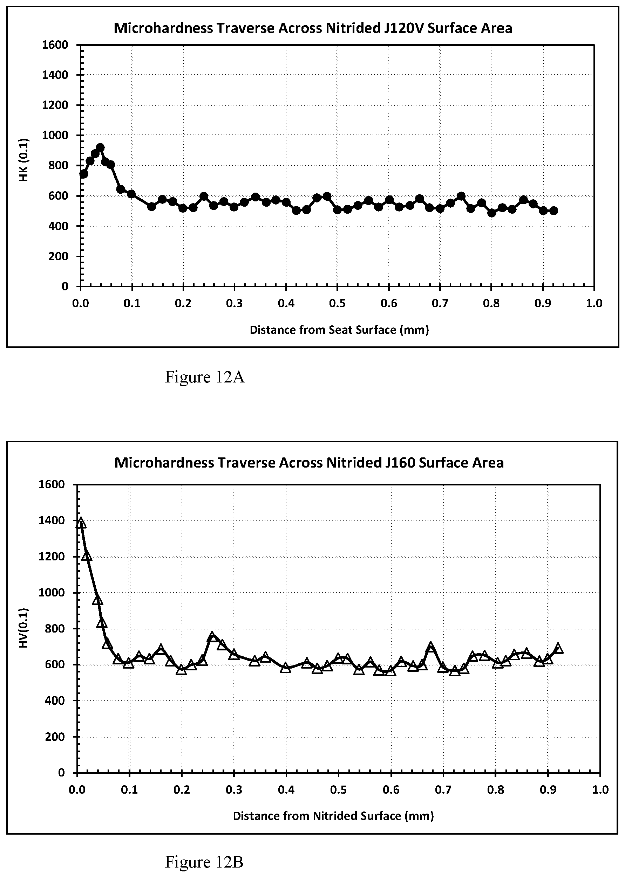

Figure 12A is a graph showing a microhardness traverse across a nitrided J120V sample salt-bath nitrided at 580°C for 3hours. An analysis of the J120V sample revealed that a compound layer is present and a soft spot formed in the center of the cross section. Elemental dot mapping of the J120V sample revealed that there is an immediate nitriding surface with oxides/carbides and a compound zone extending to a depth of about 20 µm. The surface oxide layer is connected with vertically oriented oxide/carbide phase, there is no significant nitrogen diffusion zone, and interdendritic phases are substantially minimized in the region adjacent to the nitride surface possibly due to being dissolved into the matrix.

Figure 12B is a graph showing a microhardness traverse across a J160N sample after gas nitriding at 571°C for 3 hours. An analysis of the J160 sample revealed that a compound layer is not present and only a diffusion zone is present. Elemental dot mapping of the J160 sample revealed that there is no compound zone formation and the diffusion zone extends to a depth of about 45 µm. There was no noticeable change in the microstructure in the diffusion zone compared to the underlying matrix.

With reference to commonly-assigned U.S. Patent Nos. 6,519,847 and 7,216,427, both of which are hereby incorporated by reference, precision machining procedures can be utilized to produce a valve seat insert with a seating surface where the seat angle, the seat surface finish, the seat profile, and the seat runout as compared to both the outside diameter (O.D.) and the bottom face of the valve seat insert are all controlled to very precise tolerances. These controls produce prefinished valve seat inserts, which can be installed in cylinder heads or engine blocks with or without the need for additional seat machining.

In one embodiment, the following machining process is used. After casting the rough valve seat insert, the gate remnant from the casting process is first ground off. Next, a double disk grinder is used to rough grind the top face and bottom face of the insert close to finish size. Multiple grinding passes may be used depending on insert size and material. Then, the outside diameter (O.D.) of the insert is ground on the outside diameter via centerless grinding until it is close to the finish size. A lathe is next utilized to bore the inside diameter (I.D.), if required, and to turn a lead chamfer on the outside diameter (O.D.). A finish double disk grinder operation now grinds the faces to the finish width (W) followed by a finish centerless grind to the finish outside diameter (O.D.). Parts are then vibratory finished to both clean and deburr them. The final machining operation is precision machining of the seating surface. Turning is a common method of doing this and it is necessary to control seat angle, seat to O.D. runout, and seat surface finish to the previously mentioned tolerances. Another potential manufacturing method would be to grind the precision seat.

After the valve seat insert is precision formed, it is nitrided to increase the wear resistance of the insert. However, the wear resistance treatment should preferably produce a minimum amount of dimensional distortion to the precision formed valve seat insert. In preferred embodiments, the wear resistance treatment typically produces less than 0.05 mm dimensional change on the surface of the insert.

The wear resistance treatment preferably includes any one of the following processes: ferritic nitrocarburizing, carbonitriding, gas nitriding, plasma nitriding or other suitable techniques known in the nitriding art. The nitriding is carried out such that the prefinished valve seat insert has an exposed supersaturated nitrogen region without a white layer. For gas nitriding, using gas mixture of ammonia (NH₃, ~91 vol.%) and (CO₂, 9 vol.%) the ammonia dissociates into hydrogen and nitrogen when ammonia gas contacts the metal part surface at the nitriding temperature. For ion (plasma) nitriding, a gas mixture of 85 vol.% N₂ and 15 vol.% H₂ can be used.

While some embodiments of the invention have been discussed above, alternate embodiments will be apparent to those skilled in the art and are within the intended scope of the present invention.
Below, there is provided a non-exhaustive list of non-limiting examples.
Example 1. A process for forming a surface hardened valve seat insert useful for insertion into a cylinder head or an engine block of an internal combustion engine, said process comprising the steps of:
   casting the valve seat insert from an iron-chromium alloy having no more than 75 weight percent (wt. %) iron and at least 25 wt. % alloying elements, the alloying elements including chromium in an amount of at least 9 wt.%;
   precision machining the valve seat insert to precise tolerances so that the valve seat insert can be installed in the cylinder head or the engine block with or without the need for additional seat machining; and
   nitriding the valve seat insert to produce an exposed supersaturated nitrogen region free of a white layer of nitride compounds.
Example 2. The process of example 1, wherein the nitriding step includes ferritic nitrocarburizing the valve seat insert.
Example 3. The process of example 1, wherein the nitriding step includes carbonitriding the valve seat insert.
Example 4. The process of example 1, wherein the nitriding step includes ion nitriding the valve seat.
Example 5. The process of example 1, wherein the alloy is melted and formed into the shape of a valve seat insert during the casting step.
Example 6. The process of example 5, wherein the iron-chromium alloy includes 0.15-2.00 wt.% C, 0.3-1.0 wt.% Mn, 0.10-2.15 wt.% Si, 0.35-2.25 wt.% Ni, 9.8-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt.% Fe.
Example 6a. The process of example 5, wherein the iron-chromium alloy comprises, consists essentially of, or consists of 0.15-2.00 wt.% C, 0.3-1.0 wt.% Mn, 0.10-2.15 wt.% Si, 0.35-2.25 wt.% Ni, 9.8-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt.% Fe.
Example 7. The process of example 5, wherein the iron-chromium alloy includes 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 48-75 wt.% Fe.
Example 7a. The process of example 5, wherein the iron-chromium alloy comprises, consists essentially of, or consists of 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 48-75 wt.% Fe.
Example 8. The process of example 5, wherein the iron-chromium alloy includes 1.45-1.60 wt.% C, 0.35-0.45 wt.% Mn, 0.1-0.6 wt.% Si, 0.35-1.00 wt.% Ni, 9.8-13.0 wt.% Cr, 5.4-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.
Example 8a. The process of example 5, wherein the iron-chromium alloy comprises, consists essentially of, or consists of 1.45-1.60 wt.% C, 0.35-0.45 wt.% Mn, 0.1-0.6 wt.% Si, 0.35-1.00 wt.% Ni, 9.8-13.0 wt.% Cr, 5.4-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.
Example 9. The process of example 5, wherein the iron-chromium alloy includes 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe.
Example 9a. The process of example 5, wherein the iron-chromium alloy comprises, consists essentially of, or consists of 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe. Example 10. The process of example 5, wherein the iron-chromium alloy includes 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe.
Example 10a. The process of example 5, wherein the iron-chromium alloy comprises, consists essentially of, or consists of 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe. Example 11. The process of example 5, wherein the iron-chromium alloy includes 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe.
Example 11a. The process of example 5, wherein the iron-chromium alloy comprises, consists essentially of, or consists of 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe. Example 12. The process of example 5, wherein the iron-chromium alloy includes 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe.
Example 12a. The process of example 5, wherein the iron-chromium alloy comprises, consists essentially of, or consists of 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe.
Example 13. The process of example 5, wherein the iron-chromium alloy includes 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.
Example 13a. The process of example 5, wherein the iron-chromium alloy comprises, consists essentially of, or consists of 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.
Example 14. A valve seat insert made by the process of any of the preceding claims. Example 15. The valve seat insert of example 14, wherein the supersaturated nitrogen region has a nitrogen content of 1 to 5 weight percent.
Example 16. The valve seat insert of example 14, wherein the valve seat insert is cast from a melt of an iron-chromium alloy including 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.
Example 16a. The valve seat insert of example 14, wherein the valve seat insert is cast from a melt of an iron-chromium alloy comprising, consisting essentially of, or consisting of 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.
Example 17. The valve seat insert of example 14, wherein the valve seat insert is cast from a melt of an iron-chromium alloy including 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe.
Example 17a. The valve seat insert of example 14, wherein the valve seat insert is cast from a melt of an iron-chromium alloy comprising, consisting essentially of, or consisting of 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe.
Example 18. The valve seat insert of example 14, wherein the valve seat insert is cast from a melt of an iron-chromium alloy including 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe.
Example 18a. The valve seat insert of example 14, wherein the valve seat insert is cast from a melt of an iron-chromium alloy comprising, consisting essentially of, or consisting of 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe.
Example 19. The valve seat insert of example 14, wherein the valve seat insert is cast from a melt of an iron-chromium alloy including 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe.
Example 19a. The valve seat insert of example 14, wherein the valve seat insert is cast from a melt of an iron-chromium alloy comprising, consisting essentially of, or consisting of 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe.
Example 20. The valve seat insert of example 14, wherein the valve seat insert is cast from a melt of an iron-chromium alloy including 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.
Example 20a. The valve seat insert of example 14, wherein the valve seat insert is cast from a melt of an iron-chromium alloy comprising, consisting essentially of, or consisting of 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.
Example 21. The process according to one of examples 6 to 13a, or the valve seat insert according to one of examples 16 to 20a, wherein the incidental impurities are less than 3 wt%, less than 1.5 wt%, or less than 0.5 wt%.

## Claims

1. A process for forming a surface hardened valve seat insert useful for insertion into a cylinder head or an engine block of an internal combustion engine, said process comprising the steps of:
casting the valve seat insert from an iron-chromium alloy having no more than 75 weight percent (wt. %) iron and at least 25 wt. % alloying elements, the alloying elements including chromium in an amount of at least 9 wt.%;
precision machining the valve seat insert to precise tolerances so that the valve seat insert can be installed in the cylinder head or the engine block with or without the need for additional seat machining; and
nitriding the valve seat insert to produce an exposed supersaturated nitrogen region free of a white layer of nitride compounds.

2. The process of claim 1, wherein the nitriding step includes ferritic nitrocarburizing the valve seat insert; or
wherein the nitriding step includes carbonitriding the valve seat insert; or
wherein the nitriding step includes ion nitriding the valve seat.

3. The process of claim 1, wherein the alloy is melted and formed into the shape of a valve seat insert during the casting step.

4. The process of claim 3, wherein the iron-chromium alloy includes 0.15-2.00 wt.% C, 0.3-1.0 wt.% Mn, 0.10-2.15 wt.% Si, 0.35-2.25 wt.% Ni, 9.8-33.5 wt.% Cr, up to 15.3 wt.% Mo, up to 2.6 wt.% V, up to 2.3 wt.% Nb, up to 4 wt.% W, up to 19 wt.% Co, up to 0.23 wt.% B, balance incidental impurities and 50-75 wt.% Fe.

5. The process of claim 3, wherein the iron-chromium alloy includes 0.1-2.2 wt.% C, 0.1-1.5 wt.% Mn, 0.1-2.5 wt.% Si, 0.15-3.00 wt.% Ni, 9-35 wt.% Cr, up to 17 wt.% Mo, up to 3 wt.% V, up to 2.5 wt.% Nb, up to 5 wt.% W, up to 21 wt.% Co, up to 0.3 wt.% B, balance incidental impurities and 48-75 wt.% Fe.

6. The process of claim 3, wherein the iron-chromium alloy includes 1.45-1.60 wt.% C, 0.35-0.45 wt.% Mn, 0.1-0.6 wt.% Si, 0.35-1.00 wt.% Ni, 9.8-13.0 wt.% Cr, 5.4-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.

7. The process of claim 3, wherein the iron-chromium alloy includes 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe.

8. The process of claim 3, wherein the iron-chromium alloy includes 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe.

9. The process of claim 3, wherein the iron-chromium alloy includes 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe.

10. The process of claim 3, wherein the iron-chromium alloy includes 1.55-2.00 wt.% C, 0.35-0.40 wt.% Mn, 0.1-2.0 wt.% Si, 1.1-2.0 wt.% Ni, 20.0-33.5 wt.% Cr, up to 2 wt.% Mo, up to 0.05 wt.% V, up to 2.3 wt.% Nb, up to 1.5 wt.% W, up to 0.05 wt.% Co, up to 0.2 wt.% B, balance incidental impurities and 54-75 wt.% Fe.

11. The process of claim 3, wherein the iron-chromium alloy includes 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.

12. A valve seat insert made by the process of claim 1.

13. The valve seat insert of claim 12, wherein the supersaturated nitrogen region has a nitrogen content of 1 to 5 weight percent.

14. The valve seat insert of claim 12, wherein the valve seat insert is cast from a melt of an iron-chromium alloy including 1.45-1.60 wt.% C, 0.35-0.45 wt.% Mn, 0.1-0.6 wt.% Si, 0.35-1.00 wt.% Ni, 9.8-13.0 wt.% Cr, 5.40-9.15 wt.% Mo, 1.25-1.30 wt.% V, 1.9-2.0 wt.% Nb, up to 4 wt.% W, up to 3.7 wt.% Co, up to 0.23 wt.% B, balance incidental impurities and 67.5-71.0 wt.% Fe.

15. The valve seat insert of claim 12, wherein the valve seat insert is cast from a melt of an iron-chromium alloy including 1.3-1.7 wt.% C, 0.3-0.5 wt.% Mn, 0.1-0.8 wt.% Si, 0.3-2.0 wt.% Ni, 9-15 wt.% Cr, 5-10 wt.% Mo, 1.0-1.5 wt.% V, 1.8-2.2 wt.% Nb, up to 5 wt.% W, up to 4 wt.% Co, up to 0.3 wt.% B, balance incidental impurities and 67-71 wt.% Fe; or
wherein the valve seat insert is cast from a melt of an iron-chromium alloy including 0.1-0.2 wt.% C, 0.3-0.5 wt.% Mn, up to 0.2 wt.% Si, up to 2 wt.% Ni, 14-16 wt.% Cr, 14-16 wt.% Mo, 2-3 wt.% V, 1-3 wt.% Nb, up to 0.1 wt.% W, up to 1 wt.% Co, up to 0.2 wt.% B, balance incidental impurities and 60-64 wt.% Fe; or
wherein the valve seat insert is cast from a melt of an iron-chromium alloy including 1.8-2.1 wt.% C, 0.1-0.5 wt.% Mn, 0.3-0.8 wt.% Si, 2-3 wt.% Ni, 14-18 wt.% Cr, 10-14 wt.% Mo, up to 0.2 wt.% V, up to 0.05 wt.% Nb, up to 0.3 wt.% W, 17-21 wt.% Co, up to 0.1 wt.% B, balance incidental impurities and 48-52 wt.% Fe; or
wherein the valve seat insert is cast from a melt of an iron-chromium alloy including 1.5-2.1 wt.% C, 0.3-0.5 wt.% Mn, 0.1-2.1 wt.% Si, 1.0-2.5 wt.% Ni, 20-35 wt.% Cr, up to 3 wt.% Mo, up to 0.1 wt.% V, up to 2.5 wt.% Nb, up to 2 wt.% W, up to 0.1 wt.% Co, up to 0.3 wt.% B, balance incidental impurities and 50-75 wt.% Fe.
